Europäisches Patentamt

European Patent Office

Office européen des brevets

(19)

(11) Numéro de publication : **0 360 697 B1**

(12) **FASCICULE DE BREVET EUROPEEN**

(45) Date de publication du fascicule du brevet :
26.08.92 Bulletin 92/35

(51) Int. Cl.⁵ : **F04D 15/00, F16K 47/14**

(21) Numéro de dépôt : **89402599.8**

(22) Date de dépôt : **22.09.89**

(54) **Installation de pompage, en particulier pour irrigation.**

(30) Priorité : **23.09.88 FR 8812447**

(43) Date de publication de la demande :
**28.03.90 Bulletin 90/13**

(45) Mention de la délivrance du brevet :
**26.08.92 Bulletin 92/35**

(84) Etats contractants désignés :
**CH DE ES GB IT LI NL**

(56) Documents cités :
**CH-A- 175 106**
**DE-A- 1 500 019**
**DE-B- 1 450 601**
**FR-A- 1 230 233**
**FR-A- 2 105 910**

(73) Titulaire : **OLAER INDUSTRIES**
**Z.I. 16 Rue de Seine**
**F-92704 Colombes Cedex (FR)**

(72) Inventeur : **Brault, François**
**1 Place A.P. 15**
**F-75015 Paris (FR)**

(74) Mandataire : **CABINET BONNET-THIRION**
**95 Boulevard Beaumarchais**
**F-75003 Paris (FR)**

EP 0 360 697 B1

## Description

La présente invention concerne d'une manière générale les installations de pompage, communément dites stations, du type de celles nécessaires par exemple à l'irrigation de surfaces agricoles dans certaines contrées.

Il s'agit, en bref, de puiser, à l'aide d'une pompe, dans une quelconque source, telle que nappe phréatique ou fleuve en contrebas, et d'alimenter, par cette pompe, un réservoir, tel que château d'eau ou autre, à partir duquel peut ensuite être assurée, par écoulement naturel, l'irrigation à effectuer.

Pour éviter, lorsque la pompe s'arrête, un risque de cavitation à sa sortie, et/ou un coup de bélier en retour en raison d'une possible oscillation de niveau lors d'un tel arrêt, aussi bien que pour pouvoir bénéficier de plus de souplesse au démarrage de la pompe, il est usuel de prévoir, en dérivation sur la conduite la reliant au réservoir, un accumulateur hydraulique apte à absorber, par remplissage, un certain volume de liquide, lorsque, la pompe étant en service, cette conduite est en charge, ou lors d'un coup de bélier, et à restituer, ensuite, par vidange, tout ou partie de ce volume de liquide, notamment à l'arrêt de la pompe.

Pour en minimiser le coût, il y a intérêt à ce que, eu égard aux effets qui en sont attendus, cet accumulateur hydraulique soit de volume minimal.

Pour ce faire, il est usuellement prévu, entre lui et la conduite sur laquelle il est branché, des moyens de communication différenciés propres à favoriser sa "restitution", c'est-à-dire sa vidange, par rapport à son remplissage.

Le plus souvent, à ce jour, ces moyens de communication différenciés mettent en oeuvre un clapet anti-retour, qui, normalement fermé lorsque la conduite est en charge, s'ouvre à l'arrêt de la pompe, pour la restitution, alors nécessaire, de l'accumulateur hydraulique, et qui, pour le remplissage de celui-ci, est shunté par un by-pass plus étroit, mais apte, cependant, à l'absorption d'un éventuel coup de bélier.

Or, ainsi qu'on le sait, les clapets anti-retour mettent inévitablement en oeuvre un organe mobile.

En présence d'eau chargée en débris divers, et c'est le plus souvent le cas dans les installations de pompage pour irrigation, il y a un risque certain de coincement de cet organe mobile.

Si cet organe mobile vient à se coincer en position fermée, l'accumulateur hydraulique est quasiment hors service, dans la mesure où sa restitution ne peut plus se faire que par le seul by-pass subsistant.

Il y a alors, comme indiqué précédemment, un risque de cavitation à l'arrêt de la pompe, avec une possibilité d'implosion en raison du vide en retour qui en résulte.

Si l'organe mobile du clapet anti-retour vient à se coincer en position ouverte, ce sont tous les effets des moyens de communication différenciés correspondants qui s'en trouvent modifiés, et l'accumulateur hydraulique est alors de volume insuffisant, puisque ce volume a été établi en fonction, au contraire, d'un fonctionnement normal de ces moyens de communication différenciés.

Comme précédemment, il y a donc encore un risque de cavitation et d'implosion.

Ainsi tout coincement de l'organe mobile du clapet anti-retour est de nature à être à l'origine d'une destruction au moins partielle de l'installation.

Il est connu par ailleurs des clapets anti-retour mettant en oeuvre une crépine, c'est-à-dire une paroi perforée, en pratique une paroi perforée en tronc de cône, avec, comme organe mobile, une membrane souple, qui, attelée en pratique en un point à cette paroi perforée, est apte à s'appliquer à celle-ci au repos en recouvrant alors la totalité de sa surface, et en s'opposant donc alors à tout flot dans le sens de circulation correspondant, et qui, sous les effets d'un flot inverse, est apte à s'écarter de cette paroi perforée, en laissant alors une libre circulation à ce flot.

La présente invention a d'une manière générale pour objet une disposition permettant de tirer parti d'un clapet de ce type pour minimiser, sinon annuler, les inconvénients, succinctement exposés ci-dessus, d'un éventuel coincement de l'organe mobile d'un clapet anti-retour dans les installations de pompage du genre concerné.

De manière plus précise, elle a pour objet une installation de pompage du genre comportant, en dérivation sur la conduite reliant une pompe à un réservoir, un accumulateur hydraulique, avec, entre ledit accumulateur hydraulique et ladite conduite, des moyens de communication différenciés propres à favoriser la "restitution" dudit accumulateur hydraulique, c'est-à-dire sa vidange, par rapport à son remplissage. Un tel état de la technique est réalisé dans le document CH-A-175 106. Dans l'invention une telle installation de pompage est caractérisée en ce que lesdits moyens de communication différenciés mettent en oeuvre une crépine, dont la paroi perforée est globalement en tronc de cône, avec, disposée du côté de la paroi perforée de ladite crépine opposé audit accumulateur hydraulique, une membrane souple, qui est apte à s'appliquer au repos à ladite paroi perforée, mais qui ne couvre alors qu'une fraction de la surface de celle-ci.

Grâce à une telle disposition, aucun risque de coincement n'est à craindre, et l'accumulateur hydraulique est certain de conserver toute son efficacité.

Les caractéristiques et avantages de l'invention ressortiront d'ailleurs de la description qui va suivre, à titre d'exemple, en référence aux dessins schématiques annexés sur lesquels :

la figure 1 est un bloc diagramme d'une installation de pompage suivant l'invention ;

la figure 2 est, à échelle supérieure, une vue en coupe axiale reprenant le détail de cette réalisation de pompage repéré par un encart II sur la figure 1, pour l'une des positions du clapet que comporte cette installation ;

la figure 3 est une vue en coupe axiale analogue à celle de la figure 2, pour l'autre des positions de ce clapet ;

les figures 4 et 5 sont des vues en coupe axiale qui, chacune respectivement analogues à celles des figures 2 et 3, se rapportent à une première variante de réalisation.

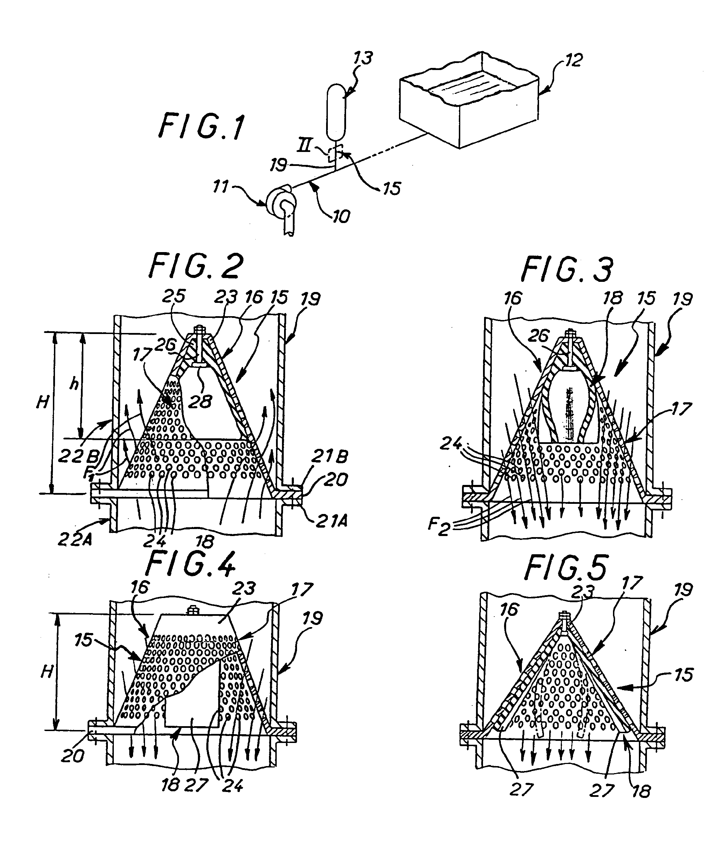

Tel qu'illustré sur la figure 1, une installation de pompage suivant l'invention comporte, en dérivation sur la conduite 10 reliant une pompe 11 à un réservoir 12, un accumulateur hydraulique 13, avec, entre cet accumulateur hydraulique 13 et la conduite 10, des moyens de communication différenciés 15 propres à favoriser la "restitution" de cet accumulateur hydraulique 13, c'est-à-dire sa vidange, par rapport à son remplissage.

Suivant l'invention, les moyens de communication différenciés 15 mettent en oeuvre une crépine 16 dont la paroi perforée 17 est globalement en tronc de cône, avec, disposée du côté de la paroi perforée 17 de cette crépine 16 opposé à l'accumulateur hydraulique 13, une membrane souple 18, qui est apte à s'appliquer, au repos, à ladite paroi perforée 17, mais qui ne couvre qu'une fraction de la surface de celle-ci.

En pratique, la crépine 16 est installée dans une canalisation 19 qui, disposée en T par rapport à la conduite 10, relie celle-ci à l'accumulateur hydraulique 13.

Dans la forme de réalisation plus particulièrement représentée sur les figures 1 à 3, cette canalisation 19 est globalement cylindrique, et, par une collerette 20 qu'elle présente radialement en saillie vers l'extérieur à cet effet, la crépine 16 est insérée entre deux brides 21A, 21B appartenant chacune respectivement à deux tronçons successifs 22A, 22B de cette canalisation 19.

En outre, dans cette forme de réalisation, la zone apicale 23 de la paroi perforée 17 de cette crépine 16, qui en forme la zone de plus petit diamètre, est disposée du côté de l'accumulateur hydraulique 13.

Soit H sa hauteur de cette zone apicale 23 à la collerette 20.

Bien entendu, les perforations 24 que comporte cette paroi perforée 17 ne s'étendent pas nécessairement sur la totalité de cette hauteur H.

En pratique, dans la forme de réalisation représentée, ces perforations 24 sont au contraire absentes au voisinage immédiat tant de la zone apicale 23 que de la collerette 20.

Il s'agit, par exemple, tel que représenté, de perforations de contour circulaire.

De manière connue en soi, elles peuvent être modulées en nombre, implantation et/ou section de passage de manière à ce que le débit résultant soit radialement aussi uniforme que possible.

Conjointement, la membrane souple 18 est elle-même globalement en tronc de cône, et, par une zone apicale 25, qui en constitue aussi la zone de plus petit diamètre, elle est emboîtée dans la zone apicale 23 de la paroi perforée 17, en étant convenablement solidarisée à celle-ci, par exemple par un tirant fileté 26.

Soit $h$ sa hauteur à compter de sa zone apicale 25.

Suivant l'invention, cette hauteur $h$ n'est qu'une fraction de la hauteur H de la paroi perforée 17.

Autrement dit, la membrane souple 18 ne s'étend que sur une fraction de la hauteur H de cette paroi perforée 17.

Ainsi, au repos, figure 2, elle ne couvre qu'une partie des perforations 24 de cette paroi perforée 17.

Par suite, par les perforations 24 laissées découvertes, un flot de liquide est possible de la pompe 11 vers l'accumulateur hydraulique 13, suivant les flèches F1 de cette figure 2.

Lorsque la pompe 11 est en service, il y a donc un remplissage systématique de l'accumulateur hydraulique 13, par la partie ainsi libre des perforations 24 de la paroi perforée 17.

Par contre, à l'arrêt de la pompe, l'accumulateur hydraulique 13 restitue à la conduite 10, suivant les flèches F2 de la figure 3, le volume de liquide qu'il a ainsi précédemment emmagasiné.

La membrane souple 18 se déformant alors élastiquement sous les effets du flot correspondant, suivant en pratique une déformation en lobes, c'est alors la totalité des perforations 24 de la paroi perforée 17 de la crépine 16 qui est utilisée à cette restitution.

Dans la variante de réalisation représentée sur les figures 4 et 5, la paroi perforée 17 de la crépine 16 est encore globalement en tronc de cône, mais, au lieu d'être circulaire, sa zone apicale 23 est allongée suivant sensiblement une fraction de diamètre de la canalisation 19 dans laquelle elle est logée.

Conjointement, la membrane souple 18 qui lui est associée s'étend sur toute sa hauteur H mais elle est fractionnée, sur une partie au moins de celle-ci, en secteurs 27 écartés les uns des autres.

Par exemple, et tel que représenté, elle se réduit à deux secteurs 27, qui, disposés en positions globalement diamétralement opposées l'un par rapport à l'autre, ont chacun un contour globalement rectangulaire, avec leur petit côté allongé suivant la zone apicale 23 de la paroi perforée 17 de la crépine 16.

Comme précédemment, la membrane souple 18 ainsi constituée ne couvre qu'une partie des perforations 24 de cette paroi perforée 17 lorsqu'elle lui est appliquée, figure 4, tout en découvrant la totalité de ces perforations 24 lorsqu'elle s'en écarte, figure 5.

## Revendications

1. Installation de pompage, du genre comportant, en dérivation sur la conduite (10) reliant une pompe (11) à un réservoir (12), un accumulateur hydraulique (13), avec, entre ledit accumulateur hydraulique (13) et ladite conduite (10) des moyens de communication différenciés (15) propres à favoriser la "restitution" dudit accumulateur hydraulique (13), c'est-à-dire sa vidange, par rapport à son remplissage, caractérisée en ce que lesdits moyens de communication différencés (15) mettent en oeuvre une crépine (16) dont la paroi perforée est globalement en tronc de cône, avec, disposée du côté de la paroi perforée (17) de cette crépine (16) opposé audit accumulateur hydraulique (13), une membrane souple (18), qui est apte à s'appliquer au repos à ladite paroi perforée (17), mais qui ne couvre qu'une fraction de la surface de celle-ci.

2. Installation de pompage suivant la revendication 1, caractérisée en ce que, la membrane souple (18) associée à la paroi perforée (17) de la crépine (16), elle-même globalement en tronc de cône, ne s'étend que sur une fraction (h) de la hauteur (H) de cette paroi perforée (17).

3. Installation de pompage suivant la revendication 1, caractérisée en ce que, la membrane souple (18) associée à la paroi perforée (17) de la crépine (16) s'étend sur toute la hauteur (H) de cette paroi perforée (17), mais elle est fractionnée, sur une partie au moins de celle-ci, en secteurs (27) écartés les uns des autres.

## Patentansprüche

1. Pumpenanlage der Bauart, bei der an die eine Pumpe (11) mit einem Vorratsbehälter (12) verbindende Leitung (10) ein Hydrospeicher (13) angeschlossen ist und zwischen dem Hydrospeicher (13) und der Leitung (10) differenzierende Verbindungsmittel (15) angeordnet sind, die der "Wiederbereitstellung" des Hydrospeichers (13), d.h. seiner Entleerung nach seiner Füllung dienen, dadurch gekennzeichnet, daß die differenzierender: Verbindungsmittel (15) aus einem Einsatzkörper (16) bestehen, dessen gelochte Wand (17) im allgemeinen die form eines Kegelstumpfes hat, und auf der vom Hydrospeicher (13) abliegenden Seite eine elastische Membran (18) aufweist, die sich im Ruhezustand an die gelochte Wand (17) anlegt, aber nur einen Teil ihrer Oberfläche abdeckt.

2. Pumpenanlage nach Anspruch 1, dadurch gekennzeichnet, daß die der im allgemeinen kegelstumpfförmigen gelochten Wand (17) des Einsatzkörpers (16) zugeordnete elastische Membran (18) sich nur über einen Teil (h) der Höhe (H) der gelochten Wand (17) erstreckt.

3. Pumpenanlage nach Anspruch 1, dadurch gekennzeichnet, daß die der im allgemeinen kegelstumpfförmigen gelochten Wand (17) des Einsatzkörpers (16) zugeordnete elastische Membran (18) sich über die gesamte Höhe (H) der gelochten Wand (17) erstreckt, aber zumindest über eine Teilhöhe in untereinander beabstandete Sektoren (27) unterteilt ist.

## Claims

1. A pumping installation, of the type comprising an hydraulic accumulator (13) in parallel with the conduit (10) connecting a pump (11) to a tank (12), having between the said hydraulic accumulator (13) and the said conduit (10) differentiated communication means (15) adapted to promote the "reconditioning" of the said hydraulic accumulator (13), *i.e.* its evacuation, with respect to its filling, characterized in that the said differentiated communication means (15) make use of a strainer (16), the perforated wall of which is generally frustoconical, with a flexible diaphragm (18) which is arranged at the side of the said perforated wall (17) of the said strainer (16) opposite to the said hydraulic accumulator (13) and which is adapted to be in contact at rest with the said perforated wall (17) but which covers only a fraction of the surface thereof.

2. A pumping installation according to Claim 1, characterized in that the flexible diaphragm (18) associated with the perforated wall (17) of the strainer (16), itself generally frustoconical, extends only over a fraction (h) of the height (H) of the said perforated wall (17).

3. A pumping installation according to Claim 1, characterized in that the flexible diaphragm (18) associated with the perforated wall (17) of the strainer (16) extends over the entire height (H) of the said perforated wall (17), but it is divided over at least part of the latter into sectors (27) at a distance from one another.

FIG.1

FIG.2

FIG.3

FIG.4

FIG.5